## Europäisches Patentamt

## European Patent Office

## Office européen des brevets

(19)

(11) Publication number: **0 214 181**
**B1**

# EUROPEAN PATENT SPECIFICATION

(12)

(45) Date of publication of the patent specification:
23.08.89

(51) Int. Cl.⁴: **C 09 D 11/02, B 41 M 5/26**

(21) Application number: **86901229.4**

(22) Date of filing: **31.01.86**

(86) International application number:
**PCT/US 86/00203**

(87) International publication number:
**WO 86/05197 (12.09.86 Gazette 86/20)**

(54) **THERMAL TRANSFER INK FORMULATION AND MEDIUM AND METHOD OF PRODUCING THE SAME.**

(30) Priority: **07.03.85 US 709474**
**07.03.85 US 709475**

(43) Date of publication of application:
**18.03.87 Bulletin 87/12**

(45) Publication of the grant of the patent:
**23.08.89 Bulletin 89/34**

(84) Designated Contracting States:
**DE FR GB**

(56) References cited:
**EP-A-0 076 044**
**US-A-4 533 596**

**Patents Abstracts of Japan, vol.7, no.203 (M-241)(1348), 8 September 1983 & JP-A 58101094 (Karbon Paper),16 June 1983**
**Patents Abstracts of Japan, vol.8, no.28(M-274)(1465), 7 February 1984 & JP-A 58185292 (Mitsubishi Seishi) 28 October 1983**

(73) Proprietor: **NCR Corporation, World Headquarters, Dayton, Ohio 45479 (US)**

(72) Inventor: **TALVALKAR, Shashi, G., 3020 Muriel Avenue, Kettering, OH 45429 (US)**
Inventor: **BESSELMAN, Thomas, P., 1096 Cambridge, Station Road, Centerville, OH 45459 (US)**

(74) Representative: **Robinson, Robert George, International Patent Department NCR Limited 206 Marylebone Road, London NW1 6LY (GB)**

EP 0 214 181 B1

## Description

The present invention relates to a thermal transfer ink formulation and a thermal transfer medium, such as a ribbon, for use in imaging or encoding characters on paper or like record media documents which enables machine reading of the imaged or magnetic encoded characters, and to a method of producing such a transfer medium.

In the printing field, the impact type printer has been the predominant apparatus for providing increased thruput of printed information. The impact printers have included the dot matrix type wherein individual print wires are driven from a home position to a printing position by individual and separate drivers, and the full character type wherein individual type elements are caused to be driven against a ribbon and paper or like record media adjacent and in contact with a platen.

The typical and well-known arrangement in a printing operation provides for transfer of a portion of the ink from the ribbon to result in a mark or image on the paper. Another arrangement includes the use of carbonless paper wherein the impact from a print wire or a type element causes rupture of encapsulated material for marking the paper. Also known are printing inks which contain magnetic particles wherein certain of the particles are transferred to the record media for encoding characters in manner and fashion so as to be machine-readable in subsequent operation.

One of the known encoding systems is MICR (magnetic ink character recognition) utilizing the manner of operation as just mentioned. While the impact printing method has dominated the industry, one disadvantage of this type printing is the noise level which is attained during printing operation. Many efforts have been made to reduce the high noise levels by use of sound absorbing or cushioning materials or by isolating the printing apparatus. More recently, the advent of thermal printing which effectively and significantly reduces the noise levels has brought about the requirement for heating of extremely precise areas of the record media by use of relatively high currents. The intense heating of the localized areas causes transfer of ink from a ribbon onto the paper or alternatively, the paper may be of the thermal type which includes materials which are responsive to the generated heat.

Further, it is seen that the use of thermal printing is adaptable for MICR encoding of documents wherein magnetic particles are caused to be transferred onto the documents for machine reading of the characters. The thermal transfer printing approach for use in MICR encoding of documents enables reliability in operation at the lower noise levels. In the area of thermal transfer ink formulations and thermal transfer media for use in non-impact printing, a large number of materials have been used in different quantities trying to achieve particular ends.

## Disclosure of Invention

It is an object of the present invention to provide a thermal transfer ink formulation and a thermal transfer medium which provide a well-defined and full transfer image.

Thus, according to one aspect of the invention, there is provided a thermal transfer ink formulation including a sensible material and a transfer material in a solvent, characterized in that said transfer material is a combination of 10 to 60 % of an amide wax, 10 to 60 % of a synthetic or natural wax, up to 40 % of a polyethylene and up to 40 % of a petroleum hydrocarbon resin, in which the ingredients of the combination always add up to 100 %.

According to another aspect of the invention, there is provided a thermal transfer medium for use in non-impact printing comprising a substrate carrying a transfer coating which includes a sensible material, characterized in that said transfer coating includes in combinaton an amide wax, a synthetic or natural wax, a polyethylene and a petroleum hydrocarbon resin.

According to yet another aspect of the invention, there is provided a method of producing a thermal transfer medium for use in non-impact printing, in which a coating dispersion is applied to a substrate and thereafter dried, characterized by preparing an emulsion of an amide wax, a synthetic or natural wax and a polyethylene in a petroleum solvent, and thereafter preparing said coating dispersion by dispersing said emulsion with a petroleum hydrocarbon resin and particles of a sensible material.

The thermal transfer medium according to the invention enables printing in quiet and efficient manner and the thermal agnetic transfer medium makes use of the advantages of thermal printing while encoding documents with a magnetic signal inducible ink.

The medium, which may be a ribbon, comprises a thin, smooth substrate such as tissue-type paper or polyester-type plastic on which is applied a coating that generally includes a sensible material, which may be a non-magnetic or magnetic material, contained in a unique combination of waxes, polyethylene and resin.

## Brief Description of the Drawings

Embodiments of the invention will now be described, by way of example, with reference to the accompanying drawings, in which:

Fig. 1 illustrates a thermal element operating with a ribbon base having a transfer coating thereon incorporating the ingredients as disclosed in the present invention; and
Fig. 2 shows the receiving paper with a coating particle transferred thereto.

## Description of the Preferred Embodiment

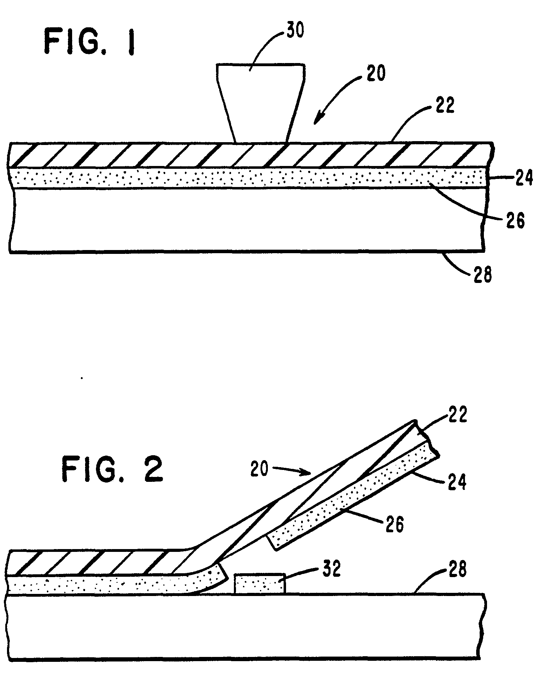

The transfer ribbon 20, as illustrated in Figs. 1 and 2, comprises a base or substrate 22 of thin, smooth tissue-type paper or polyester-type plastic or like material having a coating 24 which is thermally activated and includes non-magnetic material particles or magnetic material particles 26 as an ingredient therein for use in encoding operations to enable either human or machine reading of characters, respectively. Each character that is imaged on a receiving paper 28 or like record media produces a unique waveform that is recognized and read by the reader. In the case of thermal transfer ribbons relying solely on the non-magnetic thermal printing concept, the particles 26 include conventional coloring material such as pigments, filler and dyes.

As alluded to above, it is noted that the use of a thermal printer having a print head element, as 30, substantially reduces noise levels in the printing operation and provides reliability in MICR encoding of paper or like documents 28. The thermal magnetic transfer ribbon 20 enables the advantages of thermal printing while encoding the document 28 with a magnetic signal inducible ink. When the heating elements 30 of a thermal print head are activated, the encoding operation requires that a portion of the sensible material 26 on the coated ribbon 20 be completely transferred from the ribbon to the document 28 in manner and form to produce precisely defined characters 32 for recognition by the reader.

The thermal transfer ribbon of the present invention is produced in a two stage process wherein the first stage includes preparation of a specific wax emulsion or formulation and the second stage includes preparation of the transfer coating or layer.

A preferred wax emulsion or formulation to satisfy the first stage includes the ingredients in appropriate amounts as set forth in the following table of Example I.

### EXAMPLE I

#### Table 1

| Wax Emulsion | Percent Dry | Wet | Range |
|---|---|---|---|
| Ceramid Wax | 39.5 | 39.5 | 20 - 60 % |
| WB-5 Wax | 39.5 | 39.5 | 20 - 60 % |
| AC-617 Polyethylene | 11.7 | 11.7 | 0 - 20 % |
| Piccotex-100 Resin | 9.3 | 9.3 | 0 - 20 % |
| | 100.0 | 100.0 | |
| Mineral Spirits | | 100.0 | |
| | | 200.0 | |

The nonvolatile materials in the above formulation equate to 50 %, and it is here noted that Lacolene, or VM and P Naptha, can be substituted in place of the mineral spirits.

The second stage of the process includes preparation of the magnetic thermal transfer coating wherein the following ingredients in appropriate amounts, as set forth in Table 2 of Example I, are placed into dispersion equipment such as a ball mill, a shot mill, a sand mill, or an attritor and ground for a period of approximately 20 - 40 minutes, or for a sufficient period of time to provide a uniform fine (3 to 5 microns size) dispersion.

#### Table 2

| Material | Percent Dry | Wet | Range |
|---|---|---|---|
| Iron Oxide | 37.4 | 37.4 | 1 - 80 % |
| Wax Emulsion (from Table 1 50 % solids) | 50.5 | 101.0 | 10 - 99 % |
| Melamine Sulfonamid Resin | 6.1 | 6.1 | 0 - 20 % |
| Codispersion | | | |

| 31L62 (in various aliphatic solvents at 56 % solids) | 1.0 | 1.7 | 0 - 40 % |
| Slip Aid 425 (in Xylene at 20 % solids) | 1.0 | 5.0 | 0 - 10 % |
| Soya Lecithin | 1.0 | 1.0 | 0 - 10 % |
| Flexo Black X12 (in N-Propanol at 50 % solids) | 3.0 | 6.1 | 0 - 10 % |
| | 100.0 | 158.3 | |
| Mineral Spirits | | 79.7 | |
| | | 238.0 | |

Example II provides slightly different ingredients and amounts thereof, as set forth in Tables 1 and 2, for preparation of the transfer coating or layer.

## EXAMPLE II

### Table 1

| Wax Emulsion | Percent Dry | Wet | Range |
|---|---|---|---|
| Armid C | 39.5 | 39.5 | 20 - 60 % |
| WB-5 | 39.5 | 39.5 | 20 - 60 % |
| AC-617 | 11.7 | 11.7 | 0 - 20 % |
| Piccotex-75 | 9.3 | 9.3 | 0 - 20 % |
| | 100.0 | 100.0 | |
| Mineral Spirits | | 100.0 | |
| | | 200.0 | |

### Table 2

| Material | Percent Dry | Wet | Range |
|---|---|---|---|
| Iron Oxide | 37.4 | 37.4 | 1 - 80 % |
| Wax Emulsion (from Table I) | 50.5 | 101.0 | 10 - 99 % |
| Melamine Sulfonamid Resin Codispersion | 6.1 | 6.1 | 0 - 20 % |
| 31L62 | 1.0 | 1.7 | 0 - 40 % |
| Slip Aid 425 | 1.0 | 5.0 | 0 - 10 % |
| Soya Lecithin | 1.0 | 1.0 | 0 - 10 % |
| Flexo Black X12 | 3.0 | 6.1 | 0 - 10 % |
| | 100.0 | 158.3 | |
| Mineral Spirits | | 79.7 | |
| | | 238.0 | |

A polyterpene, such as Wingtack 95, may be substituted for the Piccotex - 75 in Table 1.

Example III further provides slightly different ingredients and amounts thereof, as set forth in Tables 1 and 2, for preparation of the transfer coating or layer.

## EXAMPLE III

### Table 1

| Wax Emulsion | Percent Dry | Wet | Range |
|---|---|---|---|
| Ceramid | 39.5 | 39.5 | 20 - 60 % |
| WB-17 | 39.5 | 39.5 | 20 - 60 % |
| AC-430 | 9.7 | 9.7 | 0 - 20 % |
| AC-617 | 2.0 | 2.0 | 0 - 20 % |

| | Percent Dry | Wet | Range |
|---|---|---|---|
| Piccotex-100 | 9.3 | 9.3 | 0 - 20 % |
| | 100.0 | 100.0 | |
| Mineral Spirits | | 100.0 | |
| | | 200.0 | |

**Table 2**

| Material | Percent Dry | Wet | Range |
|---|---|---|---|
| Iron Oxide | 30.4 | 30.4 | 1 - 80 % |
| Wax Emulsion (from Table I) | 50.5 | 101.0 | 10 - 99 % |
| Melamine Sulfonamid Resin | 6.1 | 6.1 | 0 - 20 % |
| Cupric Oxide | 7.0 | 7.0 | 0 - 40 % |
| Codispersion 31L62 | 1.0 | 1.7 | 0 - 40 % |
| Slip Aid 425 | 1.0 | 5.0 | 0 - 10 % |
| Soya Lecithin | 1.0 | 1.0 | 0 - 10 % |
| Flexo Black X12 | 3.0 | 6.1 | 0 - 10 % |
| | 100.0 | 158.3 | |
| Mineral Spirits | | 79.7 | |
| | | 238.0 | |

Examples IV, V and VI to follow exemplify embodiments in which the sensible material in a non-magnetic pigment or dye. The wax formulation to satisfy the first stage includes ingredients in appropriate amounts as set forth in the following table of Example I.

**EXAMPLE IV**

**Table 1**

| Wax Emulsion | Percent Dry | Wet | Range |
|---|---|---|---|
| Armid C Wax | 37.3 | 37.3 | 20 - 60 % |
| WB-5 Wax | 18.5 | 18.5 | 15 - 60 % |
| AC-617 Polyethylene | 11.7 | 11.7 | 0 - 20 % |
| Piccotex-100 Resin | 32.5 | 32.5 | 0 - 40 % |
| | 100.0 | 100.0 | |
| Mineral Spirits | | 100.0 | |
| | | 200.0 | |

The nonvolatile materials in the above formulation equate to 50 %, and it is here noted that Lacolene, or VM and P Naptha, can be substituted in place of the mineral spirits.

The second stage of the process includes preparation of the thermal transfer coating wherein the following ingredients in appropriate amounts, as set forth in Table 2, are placed into dispersion equipment such as a ball mill, a shot mill, a sand mill, or an attritor and ground for a period of approximately 20 - 40 minutes, or for a sufficient period of time to provide a uniform fine (3 - 5 microns size) dispersion.

**Table 2**

| Material | Percent Dry | Wet | Range |
|---|---|---|---|
| Wax Emulsion (from Table 1 50 % solids) | 55.0 | 110.0 | 10 - 99 % |
| Melamine Sulfonamid Resin | 6.5 | 6.5 | 0 - 30 % |
| Codispersion 31L62 (in various aliphatic solvents at 56 % solids) | 35.0 | 66.1 | 1 - 60 % |
| Slip Aid 425 | 1.0 | 5.0 | 0 - 10 % |

(in Xylene at 20 % solids)

| | | | |
|---|---|---|---|
| Soya Lecithin | 0.5 | 0.5 | 0 - 10 % |
| Morfast Blue | 2.0 | 4.0 | 0 - 10 % |
| (in N-Propanol at 50 % solids) | | | |
| | 100.0 | 192.1 | |
| Mineral Spirits | | 58.0 | |
| | | 250.1 | |

Example V provides slightly different ingredients and amounts thereof, as set forth in Tables 1 and 2, for preparing the transfer coating or layer.

## EXAMPLE V

**Table 1**

| Wax Emulsion | Percent Dry | Wet | Range |
|---|---|---|---|
| Ceramid | 39.5 | 39.5 | 10 - 60 % |
| WB-17 | 39.5 | 39.5 | 10 - 60 % |
| Piccotex-75 | 9.4 | 9.4 | 0 - 40 % |
| AC-617 | 11.6 | 11.6 | 0 - 40 % |
| | 100.0 | 100.0 | |
| Mineral Spirits | | 100.0 | |
| | | 200.0 | |

**Table 2**

| Material | Percent Dry | Wet | Range |
|---|---|---|---|
| Wax Emulsion | 70.0 | 140.0 | 10 - 99 % |
| (from Table 1) | | | |
| Cupric Oxide | 10.0 | 10.0 | 0 - 30 % |
| Codispersion | | | |
| 31L62 | 14.0 | 25.0 | 1 - 60 % |
| Slip Aid 425 | 1.0 | 5.0 | 0 - 10 % |
| Petrolatum | 3.0 | 3.0 | 0 - 10 % |
| Morfast Blue | 2.0 | 4.0 | 0 - 10 % |
| | 100.0 | 187.0 | |
| Mineral Spirits | | 98.7 | |
| | | 285.7 | |

Example VI further provides slightly different ingredients and amounts thereof, as set forth in Tables 1 and 2, for preparing the transfer coating or layer.

## EXAMPLE VI

**Table 1**

| Wax Emulsion | Percent Dry | Wet | Range |
|---|---|---|---|
| Ceramid | 37.5 | 37.5 | 10 - 60 % |
| WB-17 | 37.5 | 37.5 | 10 - 60 % |
| Piccotex-75 | 9.4 | 9.4 | 0 - 40 % |
| AC-430 | 11.6 | 11.6 | 0 - 40 % |
| V Wax | 4.0 | 4.0 | 0 - 15 % |
| | 100.0 | 100.0 | |
| Mineral Spirits | | 100.0 | |
| | | 200.0 | |

**Table 2**

| Material | Percent Dry | Wet | Range |
|---|---|---|---|
| Wax Emulsion | 70.0 | 140.0 | 10 - 99 % |
| (from Table 1) | | | |

| | | | |
|---|---|---|---|
| Cupric Oxide | 6.0 | 6.0 | 0 - 30 % |
| Melamine Sulfonamid Resin | 1.0 | 1.0 | 0 - 30 % |
| Codispersion 31L62 | 20.0 | 35.7 | 1 - 60 % |
| Slip Aid 425 | 1.0 | 5.0 | 0 - 10 % |
| Morfast Blue | BC 2.0 | 4.0 | 0 - 10 % |
| | 100.0 | 191.7 | |
| Mineral Spirits | | 94.0 | |
| | | 285.7 | |

Armid C is a fatty acid derived-multi carbon chain lengths amide wax and Ceramid is a fatty acid derived amide wax. WB-5 and WB-17 are oxidized, isocyanated hydrocarbon waxes. V wax is a polyvinyl ether wax. AC-430 is an ethylene vinyl acetate copolymer. AC-617 and AC-1702 are low molecular weight polyethylenes. Piccotex-75 and Piccotex-100 are hard, color stable, substituted styrene copolymer resins. Melamine Sulfonamid is an amino resin of high molecular weight made from melamine and formaldehyde. Codispersion 31L62 is a colloidal dispersion of carbon black suspended in an aliphatic solvent. Slip Aid 425 is a 20 % dispersion of polymeric wax in xylene. Morfast Blue is an organic solvent system colorant in N-propanol. Soya Lecithin is a wetting agent, oil-like extract of soybean. Flexo Black X12 is a 50 % nigrosine dispersion in alcohol. Wingtack 95 is a polyterpene resin, and Petrolatum is a non-polar, hydrophobic, biologically inert, petroleum derivative.

The nonvolatile materials are controlled at 25 - 50 % for proper viscosity. It should be noted that all ingredients are carefully weighed and solubilized in the mineral spirits using appropriate heat and agitation. After the solution is complete, it is slowly cooled to form a viscous wax dispersion to prepare a thermally active, transfer coating.

The substrate or base 22, which may be 30 - 40 gauge capacitor tissue, manufactured by Schweitzer, or 17 - 35 gauge polyester film as manufactured by duPont under the trademark Mylar, should have a high tensile strength to provide for ease in handling and coating of the substrate. Additionally, the substrate should have properties of minimum thickness and low heat resistance to prolong the life of the heating elements 30 of the thermal print head by reason of reduced print head actuating voltage and the resultant reduction in burn time.

The coating 24 is applied to the substrate 22 by means of conventional coating techniques such as a Meyer rod or like wire-wound doctor bar set up on a typical solvent coating machine to provide the coating weight of between 3 and 13 grams per square meter. The coating is made up of approximately 25 - 50 % nonvolatile material and may be maintained at a desired temperature and viscosity throughout the coating process. After the coating is applied to the substrate, the web of ribbon is passed through a dryer at an elevated temperature in the range between 93 and 150 degrees C for approximately 5 - 10 seconds to ensure good drying and adherence of the coating 24 onto the substrate 22 in making the transfer ribbon 20. The above-mentioned coating weight, as applied by the Meyer rod onto a preferred 9 - 12 microns thick substrate, overall translates to a total thickness of 15 - 20 microns.

The availability of the various ingredients used in the present invention is provided by the following list of companies.

| Material | Supplier |
|---|---|
| Armid C Wax | Armak Chemicals Inc. |
| Ceramid Wax | Glyco Chemical |
| V Wax | BASF |
| WB-5 Wax | Petrolite Corp. |
| WB-17 Wax | Petrolite Corp. |
| AC-430 Polyethylene | Allied Chemical Corp. |
| AC-617 Polyethylene | Allied Chemical Corp. |
| AC-1702 Polyethylene | Allied Chemical Corp. |
| Piccotex-100 Resin | Hercules Inc. |
| Piccotex-75 Resin | Hercules Inc. |
| Mineral Spirits | Ashland Chemical Co. |
| Melamine Sulfonamid Resin | DayGlo |
| Codispersion 31L62 | Borden Chemical Co. |
| Slip Aid 425 | Daniel Products |
| Soya Lecithin | Capricorn Chemical |
| Morfast Blue | Pylam Products |
| Flexo Black X12 | BASF |
| Petrolatum | Witco Chemical |
| Iron Oxide | BASF |
| Cupric Oxide | American Chemet |
| Wingtack 95 | Goodyear Chemical |

## Claims

1. Thermal transfer ink formulation including a sensible material and a transfer material in a solvent, characterized in that said transfer material is a combination of 10 to 60 % of an amide wax, 10 to 60 % of a synthetic or natural wax, up to 40 % of a polyethylene and up to 40 % of a petroleum hydrocarbon resin, in which the ingredients of the combination always add up to 100 %.

2. Ink formulation according to claim 1, characterized in that it contains 1 to 80 % sensible material, 20 to 60 % wax, 1 to 20 % polyethylene, 1 to 20 % petroleum hydrocarbon resin, all by dry weight, and 60 to 80 % solvent by wet weight.

3. Ink formulation according to claim 2, characterized in that it contains amide wax and synthetic wax in a ratio from 1 : 1 to 2 : 1.

4. Ink formulation according to claim 2, characterized in that it contains substantially equal amounts of amide wax and petroleum hydrocarbon resin.

5. Ink formulation according to claim 2, characterized in that it contains 1 to 10 % by weight of a polyethylene wax.

6. Ink formulation according to claim 2, characterized in that it contains 1 to 10 % by weight of a wetting agent.

7. Ink formulation according to claim 2, characterized in that it contains 1 to 60 % by weight of a colloidal dispersion of carbon black in an aliphatic solvent.

8. Thermal transfer medium for use in non-impact printing comprising a substrate (22) carrying a transfer coating (24) which includes a sensible material (26), characterized in that said transfer coating (24) includes in combination an amide wax, a synthetic or natural wax, a polyethylene and a petroleum hydrocarbon resin.

9. Thermal transfer medium, according to claim 8, characterized in that said transfer coating (24) has a coating weight of 3 to 13 grams per square meter.

10. A method of producing a thermal transfer medium for use in non-impact printing, in which a coating dispersion is applied to a substrate and thereafter dried, characterized by preparing an emulsion of an amide wax, a synthetic or natural wax and a polyethylene in a petroleum solvent, and thereafter preparing said coating dispersion by dispersing said emulsion with a petroleum hydrocarbon resin and particles of a sensible material.

## Patentansprüche

1. Thermoübertragungsfarbenzusammensetzung mit einem sensiblen Material und einem Übertragungsmaterial in einem Lösungsmittel, dadurch gekennzeichnet, daß das Übertragungsmaterial eine Kombination aus 10 bis 60 % eines Amidwachses, 10 bis 60 % eines synthetischen oder natürlichen Wachses, bis 40 % eines Polyäthylens und bis zu 40 % eines Petroleumkohlenwasserstoffharzes ist, wobei die Bestandteile der Kombination immer 100 % ergeben.

2. Farbenzusammensetzung nach Anspruch 1, dadurch gekennzeichnet, daß sie 1 bis 80 % sensibles Material, 20 % bis 60 % Wachs, 1 % bis 20 % Polyäthylen-, 1 % bis 20 % Petroleumkohlenwasserstoffharz alles in Trockengewicht und 60 % bis 80 % Lösungsmittel in Naßgewicht enthält.

3. Farbenzusammensetzung nach Anspruch 2, dadurch gekennzeichnet, daß sie Amid-Wachs und synthetisches Wachs im Verhältnis von 1 : 1 bis 2 : 1 enthält.

4. Farbenzusammensetzung nach Anspruch 2, dadurch gekennzeichnet, daß sie im wesentlichen gleiche Mengen von Amidwachs und Petroleumkohlenwasserstoffharz enthält.

5. Farbenzusammensetzung nach Anspruch 2, dadurch gekennzeichnet, daß sie 1 bis 10 Gew.-% eines Polyäthylenwachses enthält.

6. Farbenzusammensetzung nach Anspruch 2, dadurch gekennzeichnet, daß sie 1 bis 10 Gew.-% eines benetzenden Reagenten enthält.

7. Farbenzusanmmensetzung nach Anspruch 2, dadurch gekennzeichnet, daß sie 1 bis 60 Gew.-% einer kolloidalen Dispersion von Kohlenstoffschwarz in einem aliphatischen Lösungsmittel enthält.

8. Thermoübertragungsmedium zur Verwendung beim anschlagfreien Drucken mit einem Substrat (22), das eine Übertragungsbeschichtung (24) trägt, die ein sensibles Material (26) aufweist, dadurch gekennzeichnet, daß die Übertragungsbeschichtung (24) eine Kombination eines Amidwachses, eines synthetischen oder natürlichen Wachses, eines Polyäthylen und eines Petroleumkohlenwasserstoffharzes aufweist.

9. Thermoübertragungsmedium nach Anspruch 8, dadurch gekennzeichnet, daß die Übertagungsbeschichtung (24) ein Beschichtungsgewicht von 3 bis 13 g/m$^2$ hat.

10. Verfahren zum Herstellen eines Thermoübertragungsmediums zur Verwendung beim anschlagfreien Drucken, bei dem eine Beschichtungsdispersion auf ein Substrat aufgebracht und danach getrocknet wird, gekennzeichnet durch Herstellen einer Emulsion aus einem Amid-Wachs, einem synthetischen oder natürlichen Wachs und einem Polyäthylen in einem Petroleumlösungsmittel, und hernach Herstellen einer Beschichtungsdispersion durch Dispergieren der Emulsion mit einem Petroleumkohlenwasserstoffhárz und Teilchen eines sensiblen Materials.

**Revendications**

1. Formulation d'encre pour transfert thermique comprenant une matière sensible et une matière de transfert dans un solvant, caractérisée en ce que ladite matière de transfert est une association de 10 à 60 % d'une cire d'amide, de 10 à 60 % d'une cire synthétique ou naturelle, de jusqu'à 40 % d'un polyéthylène et de jusqu'à 40 % d'une résine d'hydrocarbure de pétrole, dans laquelle les ingrédients de l'association sont toujours en addition pour atteindre 100 %.

2. Formulation d'encre selon la revendication 1, caractérisée en ce qu'elle contient 1 à 80 % de matière sensible, 20 à 60 % de cire, 1 à 20 % de polyéthylène, 1 à 20 % de résine d'hydrocarbure de pétrole, tous en poids sec, et 60 à 80 % de solvant en poids humide.

3. Formulation d'encre selon la revendication 2, caractérisée en ce qu'elle contient une cire d'amide et une cire synthétique dans un rapport de 1 : 1 à 2 : 1.

4. Formulation d'encre selon la revendication 2, caractérisée en ce qu'elle contient des quantités sensiblement égales de cire d'amide et de résine d'hydrocarbure de pétrole.

5. Formulation d'encre selon la revendication 2, caractérisée en ce qu'elle contient 1 à 10 % en poids d'une cire de polyéthylène.

6. Formulation d'encre selon la revendication 2, caractérisée en ce qu'elle contient 1 à 10 % en poids d'un agent mouillant.

7. Formulation d'encre selon la revendication 2, caractérisée en ce qu'elle contient 1 à 60 % en poids d'une dispersion colloïdale de noir de carbone dans un solvant aliphatique.

8. Support pour transfert thermique à utiliser dans une impression sans impact, comprenant un substrat (22) portant un revêtement (24) de transfert qui comprend une matière sensible (26), caractérisée en ce que ledit revêtement de transfert (24) comprend en association une cire d'amide, une cire synthétique ou naturelle un polyéthylène et une résine d'hydrocarbure de pétrole.

9. Support pour transfert thermique selon la revendication 8, caractérisée en ce que ledit revêtement de transfert (24) présente un poids de revêtement de 3 à 13 g par mètre carré.

10. Procédé de production d'un support pour transfert thermique à utiliser pour une impression sans impact, dans lequel une dispersion de revêtement est appliquée sur un substrat puis séchée caractérisée par la préparation d'une émulsion d'une cire d'amide, d'une cire synthétique ou naturelle et d'un polyéthylène dans une solvant à base de pétrole, puis préparation de ladite dispersion de revêtement par dispersion de ladite émulsion avec une résine d'hydrocarbure de pétrole et des particules d'une matière sensible.

FIG. 1

FIG. 2